(19) Europäisches Patentamt
European Patent Office
Office européen des brevets

(11) **EP 1 596 318 A1**

(12) **EUROPEAN PATENT APPLICATION**

(43) Date of publication:
**16.11.2005 Bulletin 2005/46**

(51) Int Cl.7: **G06F 17/60**

(21) Application number: **05103762.0**

(22) Date of filing: **04.05.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **08.09.2004 US 936454**
**13.05.2004 US 570731 P**

(71) Applicant: **APX B.V.**
**1077 XX AMSTERDAM (NL)**

(72) Inventors:
• **Den Ouden, Barend**
**6721 JT, Bennekom (NL)**

• **Boonekamp, Paulus, Maria, Hendrikus**
**6814 MB, Arnhem (NL)**
• **De Roon, Frans, Adrianus**
**5045 PB, Tilburg (NL)**
• **De Goeij, Peter, Coenraad**
**5122 BN, Rijen (NL)**
• **Ter Horst, Jenk, Rien**
**3991 WN, Houten (NL)**

(74) Representative:
**van Looijengoed, Ferry Antoin Theodorus**
**De Vries & Metman**
**Overschiestraat 180**
**1062 XK Amsterdam (NL)**

(54) **System for regulating the production of energy in a constrained multiple area energy network**

(57)     The invention relates to a system for regulating the production of energy in a constrained multiple area energy network. The invention further relates to a system for auctioning energy and a computer program for regulating the production of energy. The energy network is deployed in several areas connected by network connections limiting the border transmission capacity.

Fig. 1

EP 1 596 318 A1

**Description**

CROSS REFERENCE TO RELATED APPLICATION

The present application is based on and claims the benefit of U.S. provisional patent application Serial No. 60/570,731, filed May 13, 2004, the content of which is hereby incorporated by reference in its entirety.

BACKGROUND OF THE INVENTION

The invention relates to a system and computer program for regulating the production of energy. In particular, the invention relates to a system and computer program for regulating the production of energy in an energy network, said energy network comprising at least three areas with energy production facilities and energy consumption facilities and network connections limiting the border transmission capacity between said areas. The invention also relates to a system for auctioning energy.

In the past decade, a trend has set wherein tasks that were previously considered to be a specific government domain are now left to the free market to a greater or lesser extent. An example of such a task is the supply of energy, such as the supply of electricity.

Another trend is the globalization of trade and commerce. This trend can also be observed in the electricity business. The trading in electricity across (national) borders is a relevant aspect of the integration of the individual (so far) electricity markets. One of the objects for the electricity market within e.g. the European Union is to realize such integration.

US 5,237,507 discloses a method and system for step-by-step introduction of an electronically simulated free market by fixing and announcing the prices of electricity and the amount of energy to be imported or exported in advance. By now, a number of countries or areas have introduced a free market for electricity, with a special electricity exchange where trading in electricity can take place. An example of such an exchange for the Netherlands is the Amsterdam Power Exchange (APX).

As an example, the European electricity market has to a large extent been strongly fragmented until now. The transmission capacity for electricity between said countries or areas is limited, so that the possibilities as regards the import and/or export of electricity between countries or areas are limited. The network connections between the various electricity networks of said countries or areas were never designed with a view to facilitating a lively trade in energy. Consequently, the fact that a choice must be made between optimizing the mechanism of supply and demand in the individual areas and optimizing the use of the border transmission capacity of the network connection between the individual areas constitutes a problem.

Furthermore, a large portion of the energy that is generated in such separated areas is thermally generated electric energy (coal-fired power plants, nuclear power plants). This form of power production is characterized in part by a low degree of flexibility as regards the starting up and shutting down of the energy production process. A precise regulation of the supply of and the demand for electricity is essential in such a situation, therefore.

WO 2004/023368 of the applicant discloses a method and computer program for regulating the energy flow in an energy network comprising a first and a second area comprising producers and consumers, in which the energy network comprises at least one network connection that limits the transmission capacity of the energy network between said first area and said second area. The method and the computer program comprise fixing an isolated energy price in the first area and in the second area in proportion to the intended energy production by the producers and the intended energy consumption by the consumers, adjusting said isolated energy prices in said first area and in said second area on the basis of simulated transmission of energy over the network connection and on the basis of the available transmission capacity, and making the adjusted energy prices for the first area and the second area and/or the actual transmission of energy accessible to the producers and/or the consumers and/or the operators of the network. Accordingly the available transmission capacity between the first and the second area forms part of the process of optimising the mechanism of supply and demand in the individual areas, the use of the method leads to a simultaneous optimisation of the mechanism of supply and demand in the individual areas and of the use of the network connection. The method effects a hard relation between the price for the energy and the price for the transmission capacity. When subsequently the energy flow data, such as the adjusted energy prices or the actual transmission of energy, are made accessible to the producers and/or the consumers and/or the network operators, it becomes possible to regulate the energy production and the energy consumption in such an energy network, and the energy producers will be aware of the energy production that is expected of them in advance. The network operators can take measures aimed at safeguarding the supply of energy on the basis of said energy flow data.

SUMMARY OF THE INVENTION

In many situations energy networks will cover more than two areas with network connections limiting the border transmission capacity.

It is an object of the invention to provide a system and computer program that allow regulation of the production of energy in energy networks comprising at least three areas with energy production facilities and energy consumption facilities and network connections limiting the border transmission capacity between said areas.

Accordingly, in an aspect of the invention the system has arithmetic means comprising computer executable code portions adapted for:

fixing isolated energy prices for said areas by receiving data strings comprising energy bids and energy offers associated with said energy production facilities and

energy consumption facilities providing a lowest isolated energy price for a first area of said areas and higher isolated energy prices for second areas of said areas; simulating export of energy from said first area and at least import of energy into said second areas to determine an export dependent price characteristic for said first area and at least import dependent price characteristics for said second areas;

combining said export dependent price characteristic with said import dependent price characteristics taking account of said limited border transmission capacities between said areas to determine an export volume of energy from said first area to each of said second areas;

generating a data string comprising an energy bid for said first area and an energy offer for each of said second areas in accordance with said determined export volume providing adjusted energy prices for said areas;

making available data indicative of the required production volume of energy by said energy production facilities in said areas in accordance with said adjusted energy prices to regulate the production of energy.

By determining the area with the lowest isolated area price and combining the various import dependent price characteristics (IDPC's) of the second areas while taking into account the relevant border transmission capacities (BTC), an export volume of energy can be determined from the export dependent price characteristic (EDPC). It is noted that in some cases also an EDPC may be determined for the second areas, as illustrated in one of the examples. The export volume, or an associated parameter, is used to calculate the adjusted area prices, or associated parameters, and hence to achieve integration of the various areas or markets. The adjusted energy prices (AEP's), or associated parameters, allow determination of the production volume of energy, or associated parameters, for the production facilities in the various areas. The AEP's for each area may be identical, i.e. the system enables the establishment of a single market. In an aspect of the invention, a controller is provided to automatically control at least the energy production facilities to arrive at a fully or substantially fully automatic regulation of the production of energy.

In an aspect of the invention, the arithmetic means comprises a market clearing (MACL) module and a market coordination (MACO) module for each of said areas to execute said computer executable code portions. Although the arithmetic means of the system may be fully centralized to minimize data exchange, it is preferred to have a MACL module and a MACO module for each area in combination with transfer of the appropriate data for each MACL and MACO module. The isolated area prices are determined for each area separately, such that preferably at least the MACL module is provided locally for each area. To allow optimal control and performance checking and provided that sufficient, reliable and fast data exchange capacity is available, also the MACO modules are preferably provided locally in each area.

In an aspect of the invention, the MACL module for each area is adapted to stop processing said data strings comprising energy bids and energy offers at the same time to fix said isolated energy prices. Such synchronization of the system is advantageous for adequate comparison of the data of the various areas enhancing the processing speed of the various data and to serve a fair and orderly market.

In a still further aspect of the invention, the MACO module of said first area is communicatively connected to said MACO modules of said second areas to receive said IDPC's in order to combine these IDPC's with said EDPC.

In an aspect of the invention, the arithmetic means comprises computer executable code portions to determine a maximum possible export volume (MPEV) for said first area and/or maximum possible import volumes (MPIV) for at least one of said second areas in dependence on said limited border transmission capacities of said network connections between said areas. By having said MPEV and MPIV available, unnecessary calculations for determining the IDPC's and EDPC can be avoided since these characteristics should only be determined up to the values of MPEV and MPIV. Accordingly, the processing speed of the arithmetic means is enhanced.

In a further aspect of the invention, a system is provided for auctioning energy for an energy network, said energy network comprising at least three areas with energy production facilities and energy consumption facilities and network connections limiting the border transmission capacity between said areas, said system having arithmetic means comprising computer executable code portions adapted for:

fixing isolated energy prices for said areas by receiving data strings comprising energy bids and energy offers associated with said energy production facilities and

energy consumption facilities providing a lowest isolated energy price for a first area of said areas and higher isolated energy prices for second areas of said areas; simulating export of energy from said first area and at least import of energy into said second areas to determine an export dependent price characteristic for said first area and at least import dependent price characteristics for said second areas;

combining said export dependent price characteristic with said import dependent price characteristics taking account of said limited border transmission capacities between said areas to determine an export volume of energy from said first area to each of said second areas;

generating a data string comprising an energy bid for said first area and an energy offer for each of said second areas in accordance with said determined export volume providing adjusted energy prices for said areas.

As a consequence of this new and inventive auctioning system, the border transmission capacity is implicitly auctioned for an energy network deployed in at least three areas.

In a further aspect of the invention, a computer program is provided for regulating the production of energy in an energy network, said energy network comprising at least three areas with energy production facilities and energy consumption facilities and network connections limiting the border transmission capacity between said areas, said computer program comprising computer executable code portions for:

fixing isolated energy prices for said areas by receiving data strings comprising energy bids and energy offers associated with said energy production facilities and

energy consumption facilities providing a lowest isolated energy price for a first area of said areas and higher isolated energy prices for second areas of said areas; simulating export of energy from said first area and at least import of energy into said second areas to determine a export dependent price characteristic for said first area and at least import dependent price characteristics for said second areas;

combining said export dependent price characteristic with said import dependent price characteristics taking account of said limited border transmission capacities between said areas to determine an export volume of energy from said first area to each of said second areas;

generating a data string comprising an energy bid for said first area and an energy offer for each of said second areas in accordance with said determined export volume providing adjusted energy prices for said areas;

making available data indicative of the required production volume of energy by said energy production facilities in said areas in accordance with said adjusted energy prices to regulate the production of energy.

The computer program may further include code portions to control or provide data for controlling the energy production facilities.

It will be understood that the energy production facilities and energy consumption facilities may be represented by traders and/or other intermediaries. In addition to that, data relating to the required production volume can be made available together with other data, such as the time span during which this production volume is required. Important is that the energy production facilities can be directly or indirectly informed of the energy production that is expected of them. The same holds for the energy consumers. Besides the energy producers, also the operators or managers of the energy network may be informed of the energy production. This is important for said operators in connection with maintaining the energy balance in the network they manage. If the energy production exceeds the maximum transmission capacity, the operators must take measures.

The invention will be further illustrated with reference to the attached drawings, which show preferred embodiments according to the invention. It will be understood that the invention is not in any way restricted to these specific and preferred embodiments.

BRIEF DESCRIPTION OF THE DRAWINGS

Fig. 1 shows an illustration of a system according to an embodiment of the invention;
Fig. 2 shows a flow chart illustrating various process steps according to a first embodiment of the invention;
Fig. 3 shows a flow chart illustrating various process steps according to a second embodiment of the invention;
Figs. 4A-4C display three arrangements of multiple areas wherein an energy network is deployed to illustrate the invention by examples;
Figs. 5A-5C display various steps taken for a system wherein an energy network is deployed between two areas according to the prior art;
Figs. 6A-6C show various characteristics for an unconstrained case in the row arrangement of Fig. 4A with a high isolated area price at the outside of the arrangement;
Figs. 7A-7C show various characteristics for a constrained case in the row arrangement of Fig. 4A with a high isolated area price at the outside of the arrangement;
Figs. 8A-8C show various characteristics for an unconstrained case in the row arrangement of Fig. 4A with a high isolated area price in the middle of the arrangement;
Figs. 9A-9C show various characteristics for a constrained case in the row arrangement of Fig. 4A with a high isolated area price in the middle of the arrangement, and
Figs. 10A-10C show various characteristics for an unconstrained case in the loop arrangement of Fig. 4B.

DETAILED DESCRIPTION OF THE ILLUSTRATIVE EMBODIMENTS

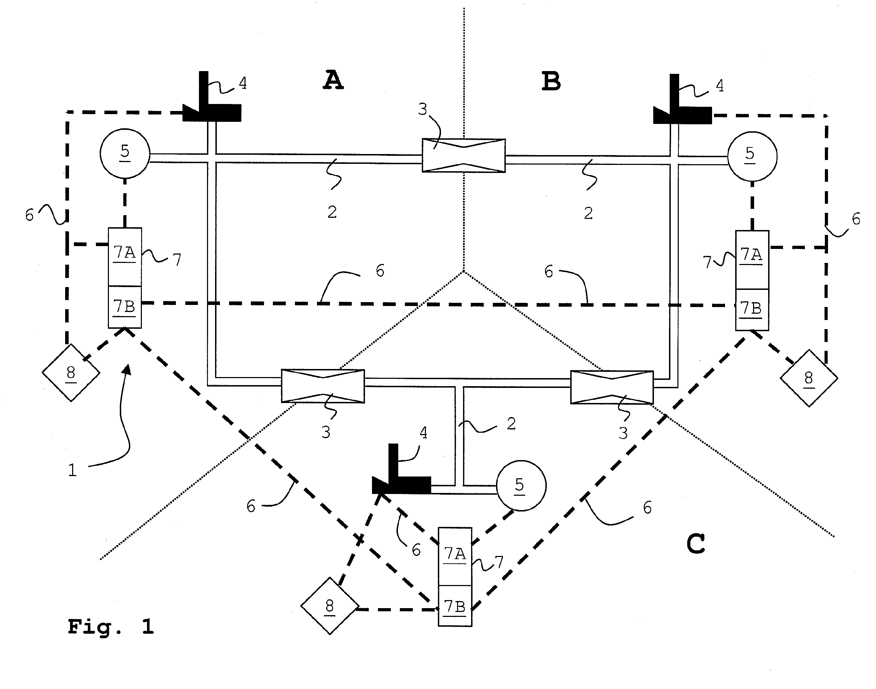

Fig. 1 shows an illustration of a system 1 according to an embodiment of the invention. Three areas A, B and C comprise an energy network 2, e.g. an electricity transmission network, that connects the three areas A, B and C with network connections or transmission interconnectors 3 limiting the border transmission capacity (BTC). A BTC is assumed to be limited if the transmission capacity of the inter-connector 3 is finite. In practice, the limitation of the BTC is relevant if the maximum possible export volume (MPEV) or maximum possible import volume (MPIV) is larger than the BTC. Such a situation is sometimes referred to as congestion or constraint. The areas A, B and C are determined by the network connections 3 of limited BTC. Each of the areas A, B and C comprises one or more energy production facilities 4 and energy consumption facilities 5 that are connected to the energy network 2. Energy production facilities are defined as facilities that generate a volume of a required form of energy, e.g. electric power.

The system 1 comprises a data transmission network 6, indicated by the bold, dashed lines, that enables the energy production facilities 4 and energy consumption facilities 5 to communicate with arithmetic means 7 (e.g. computer, arithmetic circuit) to regulate the production of energy by the energy production facilities 4. It should be appreciated that the energy production facilities 4 and energy consumption facilities 5 may be represented by intermediaries, such as agents. Further, it should be appreciated that energy production facilities may e.g. also act as energy consumption facilities and vice versa.

In the embodiment as displayed in Fig. 1, the arithmetic means 7 are shown as a distributed computer arrangement, i.e. each area A, B and C comprises its own arithmetic means 7, which arithmetic means 7 means are communicatively connected by the data transmission network 6. It should be appreciated that in principle the system 1 may comprise only one arithmetic means 7, i.e. a centralized computer arrangement, or alternatively, one or more of the areas A, B, C may comprise a plurality of arithmetic means 7.

The arithmetic means 7 comprises a market clearing (MACL) module 7A and a market coordination (MACO) module 7B. Again these modules may either form part of the same hardware or be arranged in a distributed arrangement.

The system 1 may further comprise control means (e.g. controller, control circuit) 8 being configured to receive data from one or more of the arithmetic means 7 and to control at least the energy production facilities 4 to produce a required production volume for at least one of the areas A, B or C. Accordingly the production of energy can be regulated automatically by the system 1 once having received the initial orders from the energy production facilities 4 and the energy consumption facilities 5.

The arithmetic means 7, in particular the MACL module 7A and the MACO module 7B, comprise computer executable code portions for performing the invention or aspects thereof.

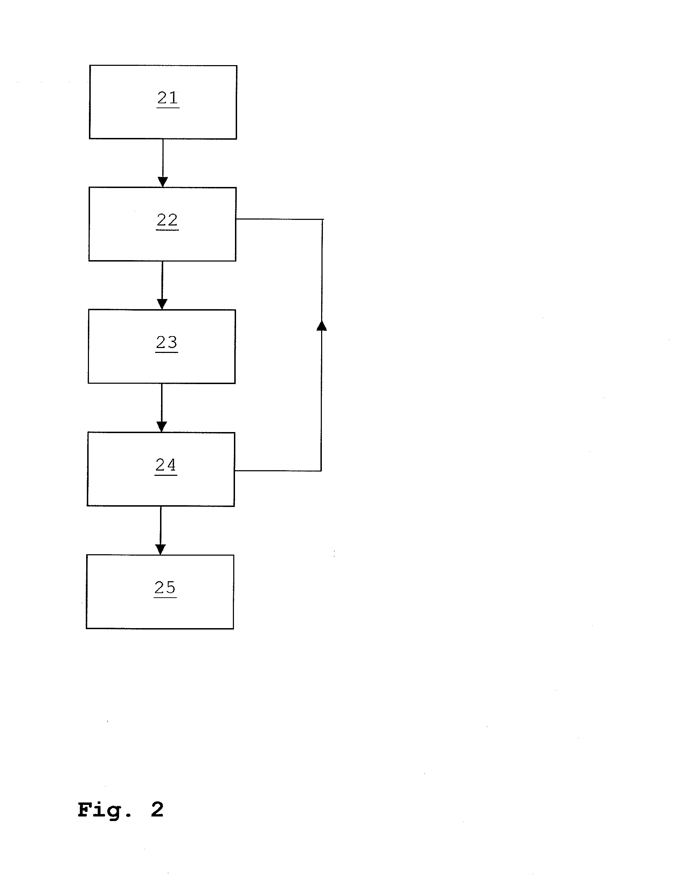

Fig. 2 displays a flow chart with some steps executed by the code portions of the arithmetic means 7 in performing the invention.

In step 21 each MACL module 7A of the areas A, B and C receives data strings of the energy production facilities 4 and energy consumption facilities 5 associated with these areas concerning energy bids and energy offers for each area. The MACL module 7A of each area A, B and C is preferably configured to stop processing the data strings comprising the energy bids and energy offers at the same time. Typically, the system 1 is a day-ahead auction system, wherein the energy bids and energy offers are processed for the following day in blocks of one hour. E.g. each of the areas A, B and C should preferably have an auction-based trading system, closing at the same hour with equal time unit for physical delivery of energy and price determination. Accordingly, the system 1 is synchronized and isolated energy prices IEP can be fixed by the MACL module 7A for each single area A, B and C. E.g. the MACL module 7A of area A fixes the isolated energy price IEP for area A, the module 7A of area B fixes the isolated energy price IEP for area B and the module 7A of area C fixes the isolated energy price IEP for area C. After fixing these IEP's for each area, they can be compared as to determine the lowest IEP and the associated area. The order of IEP's may be determined with respect to the value of the IEP. The MACO modules 7B of each area may communicate the results of this step to the other MACO modules 7B to determine the lowest IEP.

Subsequently, in step 22 export of energy from the area with the lowest IEP, hereinafter also referred to as the first area, is simulated, while import of energy is simulated for the other areas, hereinafter also referred to as the second areas. From these simulations, an export dependent price characteristic (EDPC) can be determined for the first area and import dependent price characteristics (IDPC's) can be determined for the second areas. This step is preferably performed by the MACL-module 7A of each area A, B and C. Each MACO-module 7A may receive the EDPC and IDPC's of the other areas to perform step 23.

Then, in step 23, the IDPC's are combined with the EDPC for the first area by each MACO module 7B, taking account of the BTC of the network connection 3 between the areas A, B and C. Data are kept to have information on the import contribution of each area to the resulting IDPC, the process hereinafter being referred to as volume tracking. It should be appreciated that step 23 may also be performed by a single MACO-module 7B, such as the MACO-module 7B with the lowest IEP.

The MACO module 7B of each area A, B and C checks during the construction of the EDPC and the IDPC's whether an area becomes isolated, e.g. because of exceeding the BTC or the maximum energy volume that can be produced in an area. If such isolation occurs, the coupling process of the invention for three areas may continue as a coupling process of two areas as was described in WO 2004//023368 of the applicant.

In step 24, the MACO 7B of e.g. the first area generates a data string comprising an energy bid for the first area and an energy offer for the second areas in accordance with the export volume determined in step 23 by sending these data strings over the data transmission network 6. The energy offers in the second areas correspond to the import volumes determined in the volume tracking operation. Such an "at market" bid and offer by the arithmetic means 7 corresponds to a change of the IEP's for each area, hereinafter also referred to as adjusted energy prices AEP's. If one or more of the areas A, B and C the initially matched orders have been changed, step 22 may be executed again.

In step 25, the AEP's from the arithmetic means 7 can be used to make available data indicative of the required production and consumption volume of energy by the energy production facilities 4. Accordingly, the production of energy can be regulated. In an embodiment of the invention, this regulation is automated by providing the control means 8 that control one or more of the energy production facilities 4 over the data transmission network 6 in accordance with the data received from the arithmetic means 7.

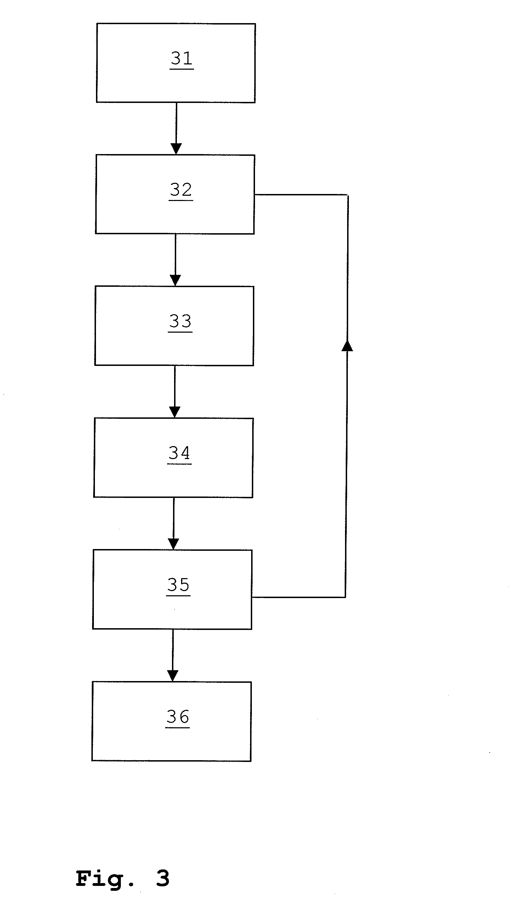

Fig. 3 shows a flow chart illustrating various process steps according to a second embodiment of the invention. Step 31, and 33-36 are identical to steps 21-25 respectively. The process shown in Fig. 3 has the additional step 32, which is designed to improve the efficiency of the system 1.

In step 32, the arithmetic means 7 comprises computer executable code portions to determine a maximum possible export volume (MPEV) for the first area and maximum possible import volumes (MPIV) for the second areas in dependence on the BTC of the various network connections 3 between the areas involved. By having the MPEV and MPIV available, unnecessary calculations for determining the IDPC's and EDPC can be avoided, since these characteristics should only be determined up to the values of MPEV and MPIV. Accordingly, the processing speed of the arithmetic means 7 is enhanced and the efficiency of the system 1 is increased.

It is noted that values for MPEV and MPIV should not necessarily exist as such, i.e. as an explicit arithmetic result of the process according to the invention; MPEV and MPIV may as be taken into account in determining the combined IDPC with several BTC without being available as an arithmetic result.

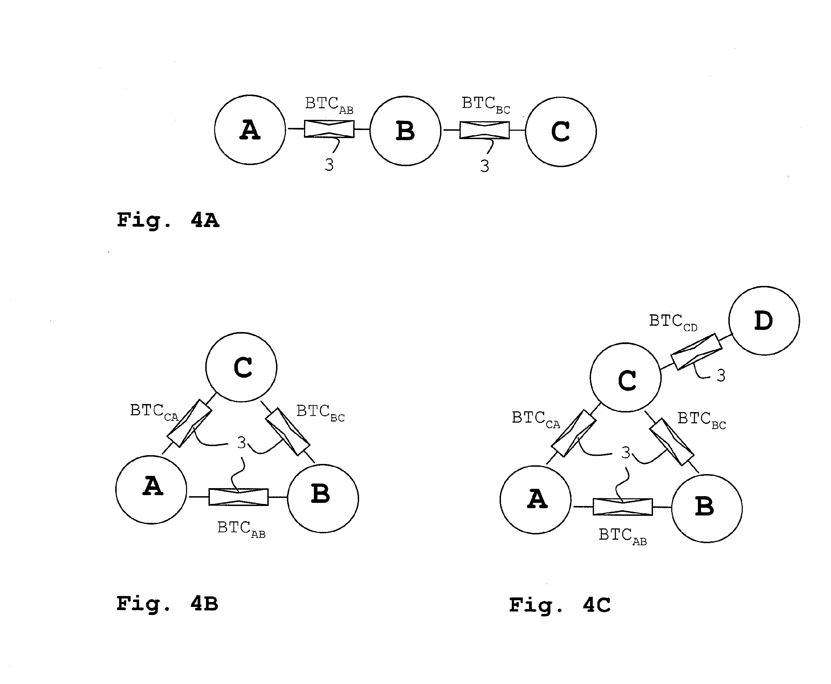

Figs. 4A-4C display three arrangements of multiple areas wherein an energy network is deployed to illustrate the invention hereinafter by examples. In Fig. 4A a row arrangement of areas A, B and C is shown, which areas A, B and C are connected by an energy network 1 and comprising network connections 3 of a limited BTC.

Fig. 4B shows a loop arrangement of areas A, B and C, again comprising an energy network 1 with network connections 3 limiting the BTC. This arrangement corresponds with that of Fig. 1. From the examples it will be shown that the arrangements of Fig. 4A and 4B are not very much different for the invention.

In Fig. 4C a four-area arrangement of areas A, B, C and D is displayed, for which a similar algorithm can be used.

Before turning to the examples for the present invention, first a brief overview is given for two areas A and B as was described in WO 2004/023368 which is herewith incorporated by reference.

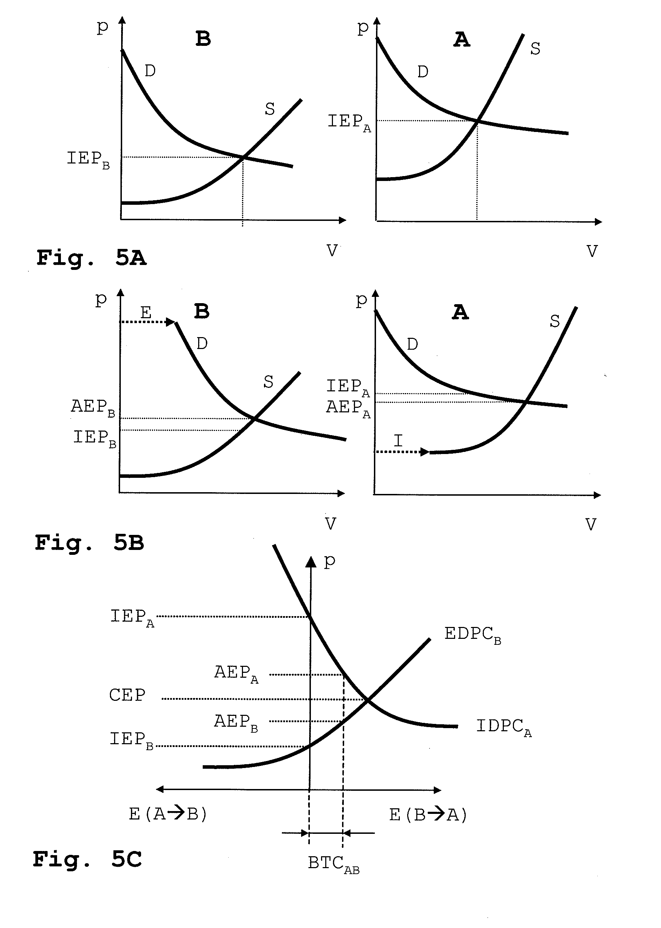

First, as shown in Fig. 5A, for each area A and B individually, isolated energy prices IEPA and IEPB are fixed by receiving data strings with energy bids and energy offers of the energy production facilities 4 and energy consumption facilities 5. These data strings comprising the initial orders are received at the arithmetic means 7, the MACL-module 7A of which aggregates a supply curve S and a demand curve D from these energy bids and energy offers and determines the IEP from the intersection of both curves S and D for each area.

Subsequently, the impact of energy import I and energy export E is determined by simulation, as displayed in Fig. 5B. As shown, on price independent exporting (the supply characteristic S shifts horizontally), the IEP for area A goes down. Here, export is defined as to buy at the market price and sell in another area and import is defined as to buy in another area and sell at the market price. The same simulation can be performed for the import I of energy. Accordingly, based on the initial orders for each area, an IDPC and an EDPC can be determined. These characteristics depict how the price changes for a net import I or export E.

A characteristic is generated for both areas A and B separated by a network connection 3 limiting the BTC. Because import I for one area is export E for the other, the characteristics can be combined in a single diagram, as shown in Fig. 5C. Normally, the isolated area prices IEPA and IEPB differ.

If there is enough transmission capacity, i.e. the network connection 3 is able to transmit the required energy volumes, to merge the areas (unconstrained case), prices would come together to a common energy price CEP for both areas A and B.

If there is not enough transmission capacity (constrained case), i.e. the capacity of the network connection 3 does not allow to transmit the required energy volumes (limited BTC), the prices for both areas move towards each other but they do not merge. Still this leads to better adjusted energy prices (AEP), because of the inter-area optimization. The markets of the areas A and B are at least partially integrated. Because of the constraint between the areas there is a revenue equal to the price difference times the transmitted energy. Thus, the BTC is implicitly auctioned. In this case the revenue equals (AEPA- AEPB)* Import. The market integration concept makes use of the BTC and the fact that export volume is purchased at market price in Area B and import volume is sold at market in Area A under the condition that IEPA > IEPB. This latter subject is a so called conditional order which will be submitted by the arithmetic means 7 itself.

The BTC can be made available in various ways, as was described in WO 2004/023368 which is herewith incorporated by reference with respect to the way in which the BTC can be made available. The BTC is e.g. daily submitted by the network managing authority (TSO) to the arithmetic means 7. The BTC will be implicitly traded through the process of the invention. When the BTC is insufficient, the arithmetic means 7 will establish implicitly the revenues from the BTC. This revenue will be returned to the TSO.

EXAMPLES

The present invention will next be described in detail by way of examples, which should not be construed as limiting the invention. For clarity purposes, also unconstrained cases, i.e. cases where the BTC does not limit energy transport or transmission between the areas, are used as examples.

EXAMPLE 1

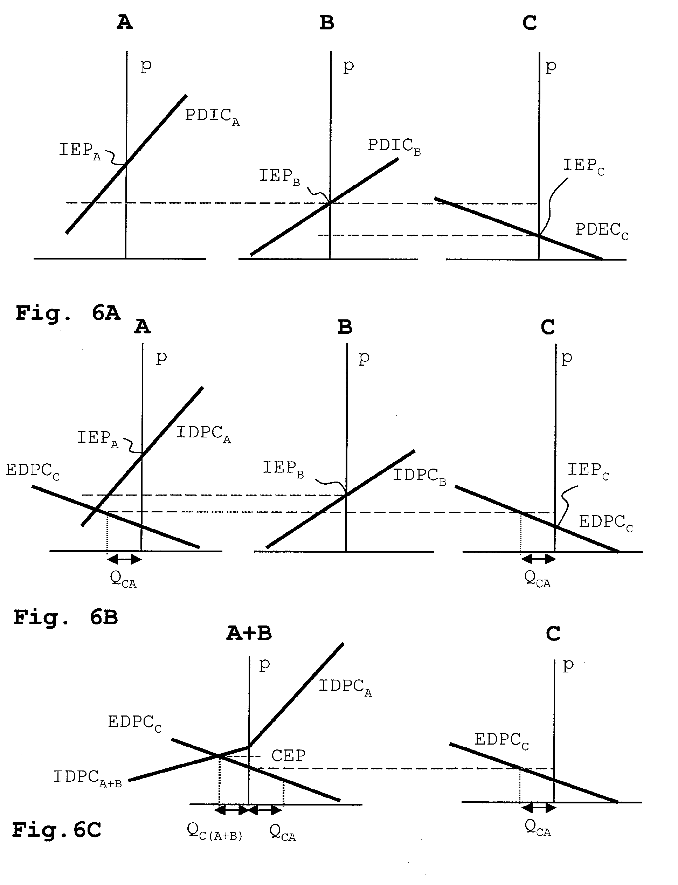

Unconstrained case for row arrangement with high price at the outside
The areas A, B and C are in a row arrangement as shown in Fig. 4A, but without the BTC's (unconstrained case).
First step 21 of Fig. 2 is performed for each area A, B and C to fix the isolated energy prices IEPA, IEPB and IEPC. This results in a lowest IEP for area C, i.e. the first area, and higher IEP's for areas A and B, i. e. the second areas in this case.
Subsequently, according to step 22, export of energy from area C and import of energy into areas A and B is simulated as was described for Fig. 5B. From these simulations, an export dependent price characteristic (EDPC) can be determined for area C and import dependent price characteristics (IDPC's) can be determined for areas A and B as shown in Fig. 6A. This step is preferably performed by the MACL-module 7A of each area A, B and C. The EDPC and IDPC of a particular area may be transmitted to the arithmetic means 7 of the other areas.

In step 23, the IDPC's from the areas A and B are combined with the EDPC of area C. First a volume QCA is exported from area C to area A until IEPA=IEPB, as shown in Fig. 6B. Thus, QCA is the energy volume transferred through area B. Then, energy is exported to both areas A and B such that the IDPC's of A and B are combined from that point, as shown in Fig. 6C. The slope of the combined IDPCA+B will be less than each of the individual slopes of the IDPC's. When the export from area C equals the sum of QCA+QC(A+B), then a common energy price CEP is obtained for all areas. For each area A, B and C, information is kept for the volumes imported into and exported from an area by volume tracking.

Subsequently, the thus determined export volume QCA+QC(A+B) is used to generate a data string comprising an energy bid for area C and an energy offer for the areas A and B. The energy offer for each of the areas A and B is determined by the imported volumes kept by the volume tracking. Such an "at market" bid and offer by the arithmetic means 7 results in a change of the IEP's for each areas, i.e. adjusted energy prices AEP's. The AEP's are equal in this example and amount to CEP. From the AEP's, data indicative of the required production volume of energy can be made available. E. g. after or during a full day of trading via the system 1, a production table can be generated comprising information for each energy production facility 4 relating to the required volume of energy for a particular energy production facility 4 during a specific hour the next day. Accordingly, the production of energy is regulated. The control means 8 can be provided to automatically control the energy production facilities 4 from the generated data.

EXAMPLE 2

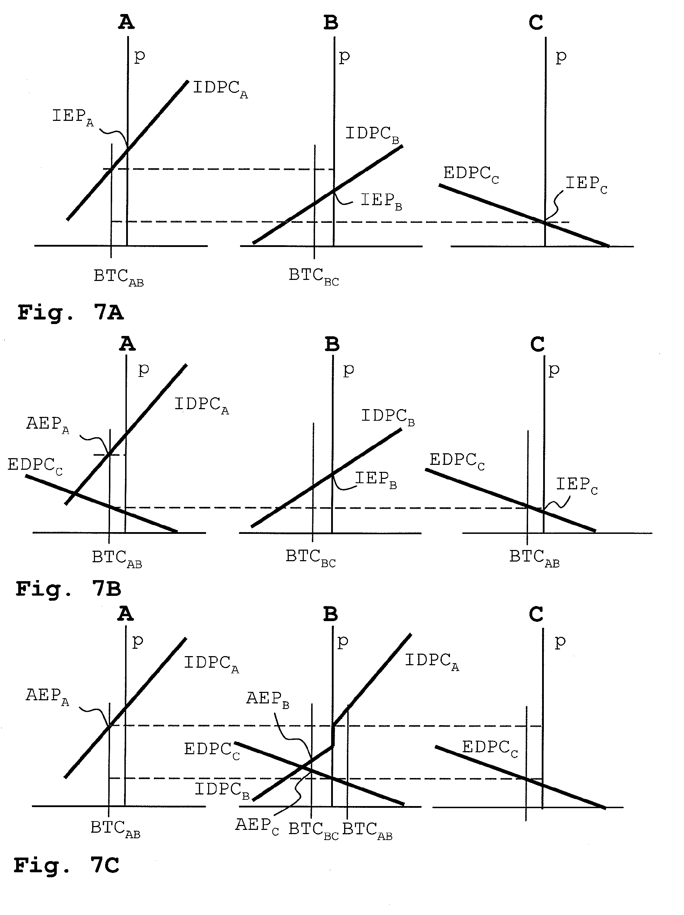

Constrained case for row arrangement with high price at the outside
For most practical situations, the BTC's of the network connections 3 are limited, i.e. a constrained case. The BTC between areas A and B is indicated by BTCAB and that between B and C by BTCBC. It is noted that BTCXY is not necessarily equal to BTCYX, but this is not of much importance for the principle of the present invention.
First step 21 of Fig. 2 is performed for each area A, B and C to fix the isolated energy prices IEPA, IEPB and IEPC. This results in a lowest IEP for area C, i.e. the first area, and higher IEP's for areas A and B, i. e. the second areas in this case.
Subsequently, according to step 22, export of energy from area C and import of energy into areas A and B is simulated as was described for Fig. 5B. From these simulations, an EDPC can be determined for area C and import dependent price characteristics IDPC's can be determined for areas A and B as shown in Fig. 7A. This step is preferably performed by the MACL-module 7A of each area A, B and C.

The EDPC and IDPC's are combined taking account of the limited border transmission capacities BTCAB and BTCBC between the areas A and B and B and C respectively to determine an export volume of energy from area C to each of the areas A and B. First a volume QCA is exported from area C to area A until QCA=BTCAB. At this export volume, only area B will import from area C, such that from that point on, only the IDPC of area B is relevant, as shown in Fig. 7B. When the export from area C equals BTCAB+BTCBC then the export from area C is zero. As shown, the adjusted area prices AEPA, AEPB and AEPC are different and a fully combined market is not achieved, i.e. price jumps are observed. When BTCAB is larger than BTCBC, aggregation of IDPCA and IDPCB into IDPCA+B will occur and a price jump is not observed.

Subsequently, the thus determined export volume QCA +QCB is used to generate a data string comprising an energy bid for area C and an energy offer for the areas A and B, import volumes for each area A and B individually being known from volume tracking. Accordingly, AEPA, AEPB and AEPC result for each area, which are non-equal in this example. Full integration of the markets for areas A, B and C is not achieved. From these AEP's, data indicative of the required production volume of energy for the various energy production facilities can be made available that may be used to automatically regulate the production of energy.

EXAMPLE 3

Unconstrained case for row arrangement with high price in the middle

The area with the highest price is not necessarily located at the outer side of the row arrangement of areas displayed in Fig. 4A. In this example, the situation is explained for the case of the highest IEP in area B without limiting BTC's.
Again, first step 21 of Fig. 2 is performed for each area A, B and C to fix the isolated energy prices IEPA, IEPB and IEPC. This results in a highest IEP for area B.

Subsequently, according to step 22 export of energy from area C and import of energy into areas A and B is simulated as was described for Fig. 5B. From these simulations, a EDPC can be determined for area C and import dependent price characteristics IDPC's can be determined for areas A and B as shown in Fig. 8A. This step is preferably performed by the MACL-module 7A of each area A, B and C.

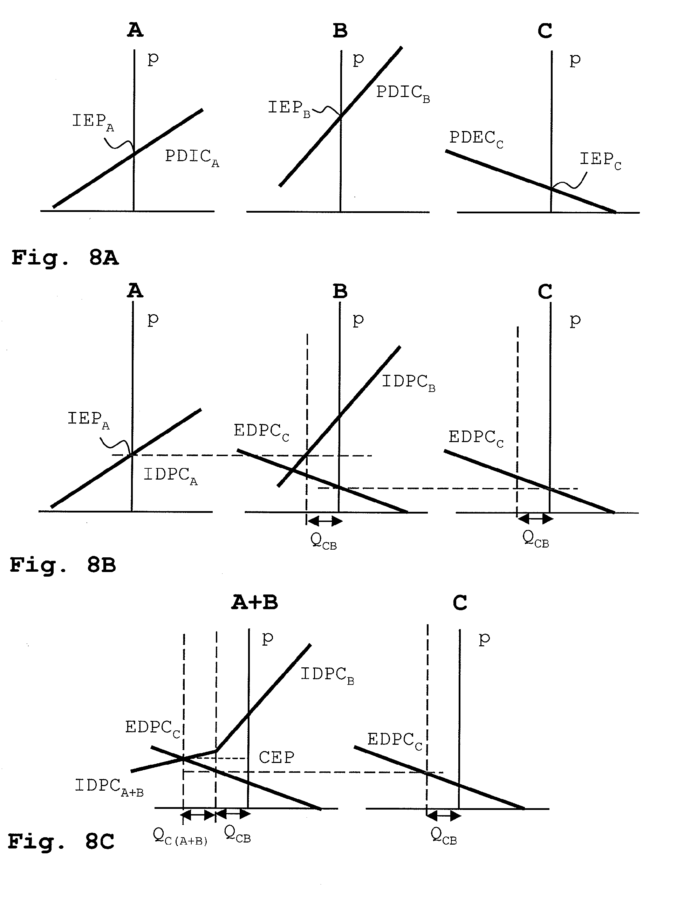

In step 23, the IDPC's from the areas A and B are combined with the EDPC of area C. First a volume QCB is exported from area C to area B until IEPB=IEPA, as shown in Fig. 8B. Then at the volume QCB, energy is exported from area C to both areas A and B such that the IDPC's of A and B are combined from that point, as shown in Fig. 8C. The slope of the combined IDPC will be less than each of the individual slopes of the IDPC's. When the export from area C equals the sum of QCB+QC(A+B), then the AEP's are equal and amount to CEP. For each area A, B and C, information is kept for the volumes imported by volume tracking.

Subsequently, the thus determined export volume QCB+QC(A+B) is used to generate a data string comprising an energy bid for area C and an energy offer for the areas A and B, the import volumes for each area individually being known from volume tracking. Accordingly, AEP's result for each area, which are equal in this example, i.e. a common energy price CEP is obtained. From these AEP's, data indicative of the required production volume of energy for the various energy production facilities can be made available that may be used to automatically regulate the production of energy.

EXAMPLE 4

Constrained case for row arrangement with high price in the middle For most practical situations, the BTC's of the network connections 3 are limited, i.e. a constrained case. The BTC between areas A and B is indicated by BTCAB and that between B and C by BTCBC.

Again, first step 21 of Fig. 2 is performed for each area A, B and C to fix the isolated energy prices IEPA, IEPB and IEPC. This results in a highest IEP for area B.

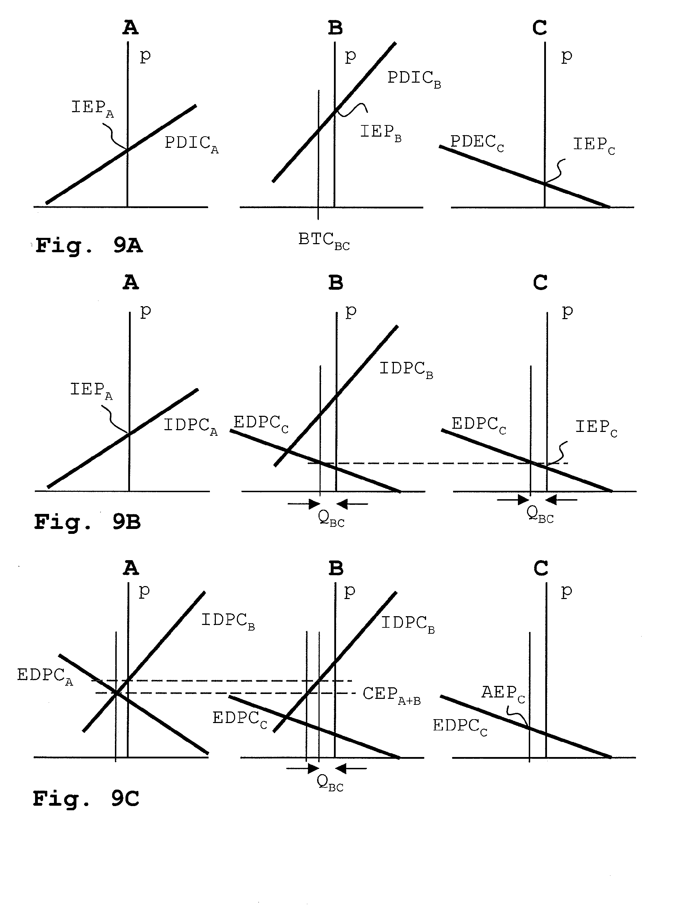

Subsequently, according to step 22, export of energy from area C and import of energy into areas A and B is simulated as was described for Fig. 5B. From these simulations, an EDPC can be determined for area C and import dependent price characteristics IDPC's can be determined for areas A and B as shown in Fig. 9A. This step is preferably performed by the MACL-module 7A of each area A, B and C.

Then, for step 23, first a volume QCB is exported from area C to area B until QCB=BTCBC, as shown in Fig. 9B. Export from C stops and the adjusted energy price for area C is AEPC. Areas A and B are isolated from area C (for import only). Then energy is exported from area A to area B as shown in Fig. 9C. Thus, in this case also an EDPC for area A is determined. A volume QAB is exported from area A to area B until IEPB=IEPA=CEPA+B. In this example it is held that BTCAB does not limit energy transmission for the applicable volumes. In this case the areas A and B constitute an integrated energy market, while area C is partially integrated.

If the energy production facilities 4 in area A are very flexible with respect to the production of energy and the energy consumption facilities 5 in area B are not flexible with respect to their demand for energy, the common energy price CEPA+B may become lower than AEPC. In that case energy is exported from areas A and B to area C. Convergent iteration of the above mentioned steps will eventually result in a stable solution.

Subsequently, the volumes determined are used to generate data strings with at market bids and offers for the various areas to make data available for the required energy production of the energy production facilities in the various areas. Again, these data can be used to automatically regulate the energy production by inputting these data to the control means 8 shown in Fig. 1.

EXAMPLE 5

Unconstrained case for a loop arrangement

In this example, the invention is explained for a loop arrangement of the areas A, B and C as displayed in Fig. 4B. It is assumed that the BTC's do not limit the transmission of energy in this example.

As for the examples of row arrangements, first step 21 of Fig. 2 is performed for each area A, B and C to fix the isolated energy prices IEPA, IEPB and IEPC. This results in a lowest IEP for area C, i.e. the first area, and higher IEP's for areas A and B, i.e. the second areas in this case.

Subsequently, according to step 22, export of energy from area C and import of energy into areas A and B is simulated as was described for Fig. 5B. From these simulations, an export dependent price characteristic (EDPC) can be determined for area C and import dependent price characteristics (IDPC's) can be determined for areas A and B as shown in Fig. 10A. This step is preferably performed by the MACL-module 7A of each area A, B and C.

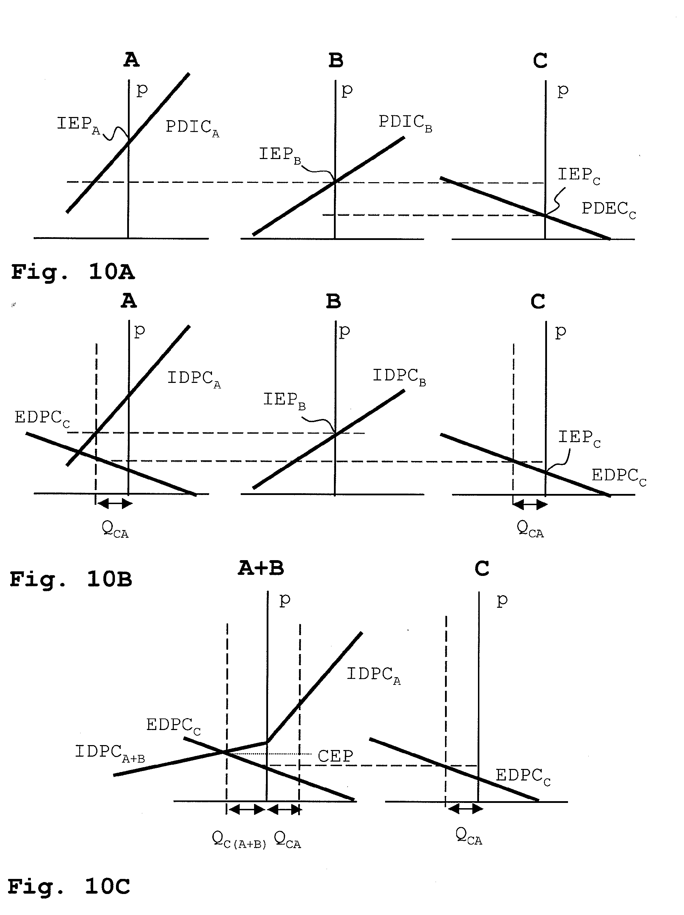

In step 23, the IDPC's from the areas A and B are combined with the EDPC of area C. First a volume QCA is exported from area C to area A as shown in Fig. 10B. Then, energy is exported to both areas A and B such that the IDPC's of A and B are combined from that point, as shown in Fig. 10C. The slope of the combined IDPC will be less than each of the individual slopes of the IDPC's. When the export from area C equals the sum of QCA+QC(A+B), then the adjusted energy prices are equal and amount to CEP. For each area individually, information is kept for the volumes imported by volume tracking.

Apparently, the results of the analysis for the loop arrangement of Fig. 4B are identical to those for the row arrangement of Fig. 4A, as can be seen by comparison with example 1.

Subsequently, the thus determined export volume QCA+QC(A+B) is used to generate a data string comprising an energy bid for area C and an energy offer for the areas A and B. Such an "at market" bid and offer by the arithmetic means 7 results in a change of the IEP's for each areas, i.e. adjusted energy prices AEP's amounting to CEP in this unconstrained example. From the AEP's, data indicative of the required production volume of energy can be made available. Control means 8 again can be applied to automatically regulate the production of energy in such an arrangement.

EXAMPLE 6

Constrained case for a loop arrangement

The values of the BTC's in this case are limited, as is usually more realistic. Again, it is assumed that IEPA> IEPB > IEPC as was displayed in Fig. 10A. Energy will only be exported from area C to area A where the total BTC equals min(BTCAB,BTCBC) + BTCCA. During this state, area C faces only IDPCA of area A and when IEPA = IEPB, area C faces the combined IDPCA+B of areas A and B. Even when the network connections 3 become constrained, area C will face first IDPCA and when IEPA = IEPB, the combined IDPCA+B of areas A and B.

Suppose that area C exports to area A and B and hence faces IDPCA+B while the network connection 3 between areas A and B is constrained. Now two possibilities exist. The first possibility is that network connection 3 between areas B and C becomes constrained, as a consequence of which area C faces IDPCA. The second possibility is that network connection 3 between areas C and A becomes constrained, as a consequence of which area C will face IDPCB.

Now suppose that area C exports to market A en B and hence faces IDPCA+B, while network connection 3 between areas B and C is constrained. Again, two possibilities exist. The first possibility is that the network connection 3 between areas A and B becomes constrained, as a consequence of which area C will face IDPCA. The second possibility is that the network connection between areas C and A becomes constrained, as a consequence of which area C will stop exporting.

The process as described above does not cause a price jump in the combined IDPC faced by area C as observed in a previous example. However, such price jumps are possible in IDPC or EDPC. E.g. in the situation where area C only exports to area A because IEPA> IEPB > IEPC and hence faces IDPCA. During this export first the network connection 3 between areas A and B becomes constrained followed by the network connection 3 between areas A and C. At this point, area C faces a jump from IEPA on IDPCA to IEPB on IDPCB, which determines the price at further import.

As can be seen also in this example, the rules do not differ from those as applied in the row arrangement of Fig. 4A. The only difference is the size of the BTC for each area.

EXAMPLE 7

Coupling of four areas in a constrained case

The previous examples concerned the coupling of three areas. However, more than three areas may be present.

Suppose an area D is connected via a network connection 3 only to area C as displayed in Fig. 4C. After performing step 21, area D qualifies as a first area, i.e. IEPD is lower than the isolated energy prices of areas A, B and C. Subsequently, the MACO module 7B of each area may determine the IDPC of areas A, B and C and the EDPC of area D. The IDPC's of areas A, B and C are combined and the resulting IDPC is further combined with EDPCD to determine the export from area D. This export is equal to the sum of the import in areas A, B and C.

Further, it can be deduced from Fig. 4C that the import in A equals min $[BTC_{CD}, \{BTC_{CA}+\min (BTC_{AB}, BTC_{BC})\}]$ the import in B equals min $[BTC_{CD}, (BTC_{BC}+\min (BTC_{AB}, BTC_{CA})]$ ; the import in C equals $BTC_{CD}$ and the export from D equals $BTC_{CD}$.

The coupling process of the areas may eventually disintegrate during incrementation of the import and export volumes to coupling of three areas or two time two areas.

In the above examples no use was made of the option to use or determine maximum possible export and import volumes (MPEV and MPIV) to enhance the efficiency of the system 1, indicated as step 32 in Fig. 3. This application of MPEV and MPIV was avoided to clearly display the intersection points of the various characteristics.

If MPEV and MPIV are applied, each MACO module 7B may calculate or use the MPEV for the first area and MPIV for the second areas. If area C qualifies as a first area, i.e. IDPC is the lowest, the following equations can be derived:

$$\text{Area A: } MPIV_A = BTC_{CA} + \min (BTC_{AB}, BTC_{BC})$$

$$\text{Area B: } MPIV_B = BTC_{BC} + \min(BTC_{AB}, BTC_{CA})$$

$$\text{Area C: } MPEV_C = BTC_{CA} + BTC_{BC}$$

The MACL module 7A for areas A and B may receive the $MPIV_A$ and $MPIV_B$ and a request for their IDPC's respectively. The MACL module of area C may receive $MPEV_C$ and a request for the EDPC.

The MPIV and MPEV can be used to decrease the number of calculations for determining the various characteristics to non-relevant ranges.

Although the present invention has been described with reference to preferred embodiments, workers skilled in the art will recognize that changes may be made in form and detail without departing from the spirit and scope of the invention.

**Claims**

1. A system for regulating the production of energy in an energy network, said energy network comprising at least three areas with energy production facilities and energy consumption facilities and network connections limiting the border transmission capacity between said areas, said system having arithmetic means comprising computer executable code portions adapted for:

fixing isolated energy prices for said areas by receiving data strings comprising energy bids and energy offers associated with energy production facilities and energy consumption facilities providing a lowest isolated energy price for a first area of said areas and higher isolated energy prices for second areas of said areas; simulating export of energy from said first area and at least import of energy into said second areas to determine an export dependent price characteristic for said first area and at least import dependent price characteristics for said second areas;
combining said export dependent price characteristic with said import dependent price characteristics taking account of said limited border transmission capacities between said areas to determine an export volume of energy from said first area to each of said second areas; generating a data string comprising an energy bid for said first area and an energy offer for each of said second areas in accordance with said determined export volume providing adjusted energy prices for said areas; and making available data indicative of the required production volume of energy by said energy production facilities in said areas in accordance with said adjusted energy prices to regulate the production of energy.

2. The system according to claim 1, wherein said arithmetic means is communicatively connected to at least one control means, said control means being configured to receive said data and to control said energy production facilities to produce a required production volume for at least one of said areas.

3. The system according to claim 1, wherein said arithmetic means comprises a market clearing module and a market coordination module for each of said areas to execute said computer executable code portions.

4. The system according to claim 3, wherein said market clearing module for each area is adapted to stop processing said data strings comprising energy bids and energy offers at the same time to fix said isolated energy prices.

5. The system according to claim 3, wherein said market coordination module of said first area is communicatively connected to said market coordination modules of said second areas to receive said import dependent price characteristics in order to combine these import dependent price characteristics with said export dependent price characteristic.

6. The system according to claim 1, wherein arithmetic means comprises computer executable code portions to determine a maximum possible export volume for said first area and/or maximum possible import volumes for at least one of said second areas in dependence on said limited border transmission capacities of said network connections between said areas.

7. A system for auctioning energy for an energy network, said energy network comprising at least three areas with energy production facilities and energy consumption facilities and network connections limiting the border transmission capacity between said areas, said system having arithmetic means comprising computer executable code portions adapted for:

fixing isolated energy prices for said areas by receiving data strings comprising energy bids and energy offers associated with energy production facilities and energy consumption facilities providing a lowest isolated energy price for a first area of said areas and higher isolated energy prices for second areas of said areas; simulating export of energy from said first area and at least import of energy into said second areas to determine an export dependent price characteristic for said first area and at least import dependent price characteristics for said second areas; combining said export dependent price characteristic with said import dependent price characteristics taking account of said limited border transmission capacities between said areas to determine an export volume of energy from said first area to each of said second areas; and generating a data string comprising an energy bid for said first area and an energy offer for each of said second areas in accordance with said determined export volume providing adjusted energy prices for said areas.

8. A computer program for regulating the production of energy in an energy network, said energy network comprising at least three areas with energy production facilities and energy consumption facilities and network connections limiting the border transmission capacity between said areas, said computer program comprising computer executable code portions for:

fixing isolated energy prices for said areas by receiving data strings comprising energy bids and energy offers associated with said energy production facilities and energy consumption facilities providing a lowest isolated energy price for a first area of said areas and higher isolated energy prices for second areas of said areas; simulating export of energy from said first area and at least import of energy into said second areas to determine a export dependent price characteristic for said first area and at least import dependent price characteristics for said second areas; combining said export dependent price characteristic with said import dependent price characteristics taking account of said limited border transmission capacities between said areas to determine an export volume of energy from said first area to each of said second areas; generating a data string comprising an energy bid for said first area and an energy offer for each of said second areas in accordance with said determined export volume providing adjusted energy prices for said areas; and making available data indicative of the required production volume of energy by said energy production facilities in said areas in accordance with said adjusted energy prices to regulate the production of energy.

Fig. 1

EP 1 596 318 A1

Fig. 2

**Fig. 3**

**Fig. 4A**

**Fig. 4B**

**Fig. 4C**

Fig. 5A

Fig. 5B

Fig. 5C

Fig. 6A

Fig. 6B

Fig. 6C

Fig. 7A

Fig. 7B

Fig. 7C

Fig. 8A

Fig. 8B

Fig. 8C

**A** **B** **C**

p p p

$IEP_A$

$PDIC_A$

$PDIC_B$

$IEP_B$

$PDEC_C$ $IEP_C$

**Fig. 9A** $BTC_{BC}$

**A** **B** **C**

p p p

$IEP_A$

$IDPC_A$ $IDPC_B$

$EDPC_C$ $EDPC_C$ $IEP_C$

$Q_{BC}$ $Q_{BC}$

**Fig. 9B**

**A** **B** **C**

p p p

$IDPC_B$ $IDPC_B$

$EDPC_A$

$CEP_{A+B}$

$AEP_C$

$EDPC_C$ $EDPC_C$

$Q_{BC}$

**Fig. 9C**

**A**

IEP$_A$    PDIC$_A$

**B**

IEP$_B$    PDIC$_B$

**C**

IEP$_C$    PDEC$_C$

p    p    p

**Fig. 10A**

**A**

EDPC$_C$    IDPC$_A$

**B**

IEP$_B$    IDPC$_B$

**C**

IEP$_C$    EDPC$_C$

p    p    p

Q$_{CA}$    Q$_{CA}$

**Fig. 10B**

**A+B**

IDPC$_A$

EDPC$_C$

IDPC$_{A+B}$    CEP

**C**

EDPC$_C$

p    p

Q$_{C(A+B)}$ Q$_{CA}$    Q$_{CA}$

**Fig. 10C**

21

## EUROPEAN SEARCH REPORT

European Patent Office

Application Number

EP 05 10 3762

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X,D | WO 2004/023368 A (AMSTERDAM POWER EXCHANGE SPOTMARKET B.V; DEN OUDEN, BAREND) 18 March 2004 (2004-03-18) * abstract * * page 1, line 27 - page 4, line 7 * * page 4, line 31 - page 7, line 12 * * page 9, line 13 - page 11, line 23 * * page 18, lines 3-28 * ----- | 1-8 | G06F17/60 |
| X | US 2003/225661 A1 (PELJTO HASO) 4 December 2003 (2003-12-04) * abstract * * page 1, paragraph 3-10 * * page 2, paragraph 13-16 * * page 2, paragraph 20-22 * * page 3, paragraphs 27,28,34 * ----- | 1-8 | |
| X | YU Z ET AL: "Optimal and reliable dispatch of supply and demand bids for competitive electricity markets" POWER ENGINEERING SOCIETY SUMMER MEETING, 2000. IEEE 16 - 20 JULY 2000, PISCATAWAY, NJ, USA,IEEE, vol. 4, 16 July 2000 (2000-07-16), pages 2138-2143, XP010510867 ISBN: 0-7803-6420-1 * abstract * * part I. Introduction, pages 2138-2139 * * tables 1-6, page 2141 * * tables 11-13, page 2142 * * part IV. Conclusions, page 2142 * ----- -/-- | 1-8 | TECHNICAL FIELDS SEARCHED (Int.Cl.7) G06F |

The present search report has been drawn up for all claims

| Place of search | Date of completion of the search | Examiner |
|---|---|---|
| The Hague | 5 August 2005 | De Smet, M |

**European Patent Office**

**EUROPEAN SEARCH REPORT**

Application Number

EP 05 10 3762

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | RANATUNGA R A S K ET AL: "CASE STUDY OF NETWORK CHARACTERISTICS BASED OPTIMAL PRICING AND DISPATCH" 1999 IEEE TRANSMISSION AND DISTRIBUTION CONFERENCE. NEW ORLEANS, LA, APRIL 11 16, 1999, IEEE TRANSMISSION AND DISTRIBUTION CONFERENCE, NEW YORK, NY : IEEE, US, vol. VOL. 1, 11 April 1999 (1999-04-11), pages 190-196, XP000955024 ISBN: 0-7803-5516-4 * abstract * * page 191, column 1, lines 23-29 * * page 191, column 1, line 51 - page 192, column 2, line 33 * * tables 1,2, page 193 * * tables 3-5, page 194 * ----- | 1-8 | |
| X | US 6 473 744 B1 (TUCK DAVID ET AL) 29 October 2002 (2002-10-29) * abstract * * column 1, line 15 - column 2, line 67 * ----- | 1-8 | TECHNICAL FIELDS SEARCHED (Int.Cl.7) |

The present search report has been drawn up for all claims

| Place of search | Date of completion of the search | Examiner |
|---|---|---|
| The Hague | 5 August 2005 | De Smet, M |

EPO FORM 1503 03.82 (P04C01)

**EP 1 596 318 A1**

| Patent document cited in search report | | Publication date | Patent family member(s) | | Publication date |
|---|---|---|---|---|---|
| WO 2004023368 | A | 18-03-2004 | NL | 1021394 C2 | 05-03-2004 |
| | | | AU | 2003221169 A1 | 29-03-2004 |
| | | | EP | 1537502 A1 | 08-06-2005 |
| | | | WO | 2004023368 A2 | 18-03-2004 |
| US 2003225661 | A1 | 04-12-2003 | US | 2004024685 A1 | 05-02-2004 |
| | | | US | 2003225676 A1 | 04-12-2003 |
| | | | US | 2004019573 A1 | 29-01-2004 |
| US 6473744 | B1 | 29-10-2002 | US | 6115698 A | 05-09-2000 |